# FASCICULE DE BREVET EUROPEEN

(11) **EP 3 411 256 B1**
(45) Date de publication et mention de la délivrance du brevet: **28.10.2020**
(21) Numéro de dépôt: 17707611.4
(22) Date de dépôt: 01.02.2017
(51) Int. Cl.: B60K 11/08

(54) **DISPOSITIF D'OBTURATION D'ENTRÉE D'AIR DE FACE AVANT DE VÉHICULE AUTOMOBILE**
VERSCHLUSSVORRICHTUNG FÜR EINEN LUFTEINLASS AN DER FRONTSEITE EINES KRAFTFAHRZEUGS
CLOSURE DEVICE FOR AN AIR INLET IN THE FRONT FACE OF A MOTOR VEHICLE

(30) Priorité: 03.02.2016 FR 1650846
(43) Date de publication de la demande: 12.12.2018
(73) Titulaire: Valeo Systemes Thermiques-THS, 78322 Le Mesnil Saint Denis Cedex (FR)
(72) Inventeur: HERLEM, Jean-Paul, 78180 Montigny Le Bretonneux (FR)
(74) Mandataire: Tran, Chi-Hai
(86) Numéro de dépôt international: PCT/FR2017/050220
(87) Numéro de publication internationale: WO 2017/134383

(56) Documents cités:
- WO-A2-2012/158512
- US-A1- 2013 284 401
- US-A1- 2014 170 960

## Description

La présente invention concerne les dispositifs d'obturation et plus précisément un dispositif d'obturation d'entrée d'air de face avant de véhicule automobile. Un exemple d'un tel dispositif est connu du document WO 2012/158512 A2.

Les faces avant de véhicules automobiles sont généralement composées de deux entrées d'air principales dites voie haute et voie basse, séparées par une poutre pare-choc. Derrière cette poutre pare-choc sont généralement placés les échangeurs de chaleur du véhicule automobile, comme par exemple celui utilisé pour la climatisation de l'habitacle et/ou encore celui utilisé pour le refroidissement du moteur.

Il est également connu de disposer, dans le trajet d'air passant par les entrées d'air principales, plus généralement la voie basse, un cadre support comportant une multiplicité de volets montés pivotants autour d'axes parallèles et propres à prendre une multiplicité de positions angulaires différentes, comprises entre une position d'ouverture et une position d'obturation, sous l'action de moyens de commande appropriés.

On obtient ainsi un dispositif d'obturation s'apparentant à une jalousie qui permet d'ajuster le débit d'air traversant les entrées d'airs et arrivant aux échangeurs de chaleur. Il est ainsi possible d'optimiser l'efficacité de ces échangeurs de chaleur en fonction des besoins et en faisant varier la quantité d'air qu'ils reçoivent. De plus, à grande vitesse, les volets en position d'obturation permettent de diminuer le coefficient de traînée du véhicule et ainsi améliorent l'aérodynamisme dudit véhicule.

Généralement, le dispositif permettant le passage d'une position d'obturation à une position d'ouverture des volets comporte un actionneur le plus souvent électrique, faisant pivoter les volets en synchronisme, au moyen d'une bielle de commande.

Afin de faire pivoter en synchronisme les volets, la bielle de commande effectue un mouvement de translation. Lors de ce mouvement de translation, la bielle de commande peut louvoyer et se bloquer ou s'user prématurément du fait de ce louvoiement.

Un des buts de la présente invention est donc de remédier au moins partiellement aux inconvénients de l'art antérieur et de proposer un dispositif d'obturation amélioré.

La présente invention concerne donc un dispositif d'obturation pour entrée d'air de face avant de véhicule automobile, comprenant :
- un cadre support,
- au moins un volet monté pivotant autour d'un axe de pivotement entre une position d'obturation et une position d'ouverture, ledit au moins un volet étant installé au sein du cadre support,
- au moins un élément de commande pilotant le positionnement du ou des volets, ledit élément de commande comportant :
   ∘ une bielle de commande reliée à ledit au moins un volet,
   ∘ un actionneur apte à appliquer à la bielle de commande un mouvement de translation de sorte à faire pivoter ledit au moins un volet,
ledit dispositif d'obturation comportant un dispositif de guidage en translation de la bielle de commande.

La présence d'un dispositif de guidage en translation de la bielle permet d'accompagner les mouvements en translation de ladite bielle de commande et diminue ainsi les risques de louvoiement de ladite bielle de commande.

Selon un aspect de l'invention, le dispositif de guidage comporte :
- au moins une première nervure disposée parallèlement au mouvement de translation de la bielle de commande, et
- au moins un guide associé à la ou les premières nervures,
la ou les premières nervures faisant saillies de la bielle de commande et le ou les guides étant disposés sur le cadre support ou inversement.

Selon un autre aspect de l'invention, au moins un guide comporte une rainure dans laquelle une première nervure associée est apte à coulisser.

Selon un autre aspect de l'invention, au moins un guide comporte au moins deux éléments de guidage alignés et espacés les uns des autres, les éléments de guidage comprenant une rainure, lesdites rainures étant alignées entre elles de sorte qu'une même première nervure associée puisse coulisser simultanément dans les rainures de tout les éléments de guidages.

Selon un autre aspect de l'invention, le dispositif d'obturation comporte un unique dispositif de guidage.

Selon un autre aspect de l'invention, le dispositif d'obturation comporte deux dispositifs de guidage, les premières nervures ou les deux guides desdits dispositifs de guidage étant disposés chacun sur un bord latéral de la bielle de commande.

Selon un autre aspect de l'invention, le dispositif de guidage comporte :
- deux premières nervures, et
- un guide pour chacune desdites premières nervures, lesdits guides comportant une deuxième nervure,
les premières nervures faisant saillies de la bielle de commande et les deuxièmes nervures faisant saillies du cadre support ou inversement,
chaque première nervure ayant sa paroi interne placée en vis à vis de la paroi externe d'une deuxième nervure ou chaque première nervure ayant sa paroi externe placée en vis à vis de la paroi interne d'une deuxième nervure.

Selon un autre aspect de l'invention, le jeu entre la ou les premières nervures et le guide est compris entre 0,1 et 0,5 mm, de préférence entre 0,2 et 0,3 mm.

Selon un autre aspect de l'invention, le chevauchement entre la ou les premières nervures et le guide est supérieur d'au moins 2 mm au décalage en profondeur de la bielle de commande lors de son mouvement de translation.

Selon un autre aspect de l'invention, la ou les premières nervures et le ou les guides viennent de matière avec l'élément qui les porte.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique en perspective de face d'un dispositif d'obturation en position d'obturation,
- la figure 2 montre une représentation schématique en perspective d'un élément de commande,
- la figure 3 montre une représentation schématique en coupe transversale d'un dispositif d'obturation au niveau de l'élément de commande,
- les figures 4 et 5 montrent des représentations schématiques en perspective de dispositifs de guidage selon différents modes de réalisation,
- les figures 6 à 7b montrent des représentations schématiques en coupe transversale de dispositifs d'obturation au niveau de l'élément de commande selon différents modes de réalisation,
- la figure 8 montre une représentation schématique d'un dispositif de guidage selon un mode de réalisation particulier.

Les éléments identiques sur les différentes figures, portent les mêmes références.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Dans la présente description on peut indexer certains éléments ou paramètres, comme par exemple premier élément ou deuxième élément ainsi que premier paramètre et deuxième paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tels ou tels critères.

Sur les différentes figures, nous utiliserons un trièdre XYZ afin de montrer l'angle de vue de chacune desdites figures les unes par rapport aux autres. Les axes de ce trièdre peuvent également correspondre aux différentes orientations du véhicule automobile. L'axe X peut ainsi correspondre à l'axe de la longueur du véhicule, l'axe Y à l'axe de sa largeur et l'axe Z à celui de sa hauteur.

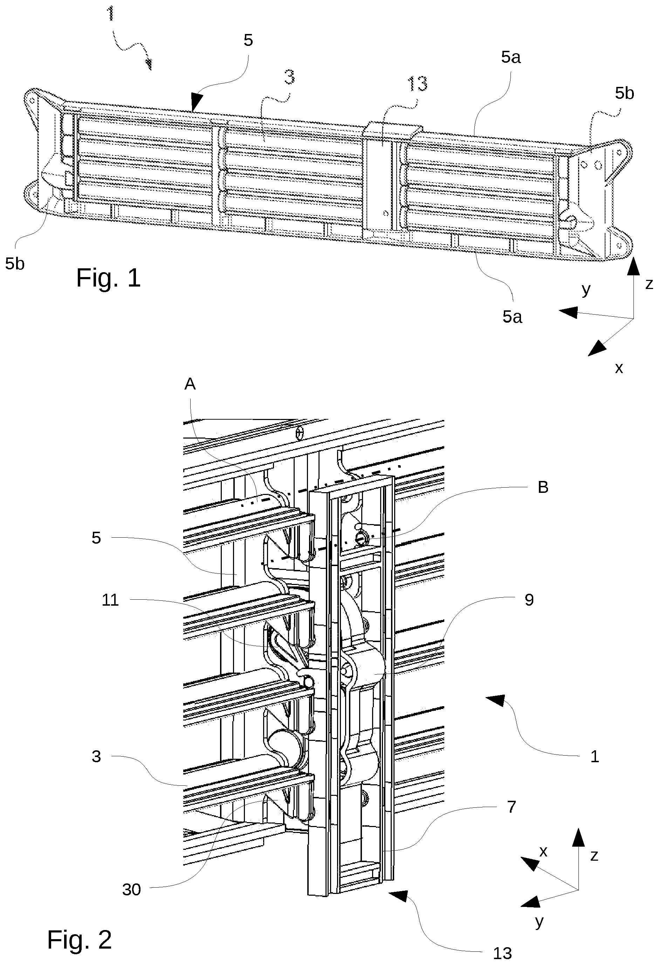

La figure 1 montre une représentation schématique en perspective d'un dispositif d'obturation 1 en position d'obturation. Cette figure 1 montre plus exactement la face externe dudit dispositif d'obturation 1, c'est-à-dire la face dirigée vers l'extérieur du véhicule automobile lorsque le dispositif d'obturation 1 est assemblé sur le véhicule..

Ledit dispositif d'obturation 1 comporte un cadre support 5 comprenant notamment deux traverses longitudinales 5a, s'étendant parallèlement à l'axe Y du trièdre, et au moins deux montants latéraux 5b, s'étendant parallèlement à l'axe Z du trièdre, et reliant lesdites traverses traverses longitudinales 5a. Avantageusement, le cadre support 5 est réalisé en matière plastique et les deux traverses longitudinales 5a et les au moins deux montants latéraux 5b sont moulés. Afin d'améliorer la rigidité dudit cadre support 5, ce dernier peut être moulé en une seule pièce.

Au sein dudit cadre support 5 est installé le ou les volets 3. Lorsqu'il y a une pluralité de volets 3, ces derniers forment des rangs de volets 3 parallèles entre eux et qui forment un ensemble de volets 3. A l'une des extrémités du volet 3 ou de l'ensemble de volets 3, est placé un élément de commande 13 permettant la rotation du ou des volets 3 autour d'un axe de pivotement A, entre une position d'ouverture (non représentée), où le ou les volets 3 sont disposés de sorte qu'un flux d'air puisse traverser le dispositif d'obturation 1, notamment à l'intérieur du cadre support 5, et une position d'obturation illustrée à la figure 1, où le ou les volets 3 sont agencés de sorte qu'un flux d'air ne puisse pas traverser le dispositif d'obturation 1.

Comme illustré sur la figure 1, il est possible d'avoir un dispositif d'obturation 1 d'une entrée d'air de face avant de véhicule automobile comportant plusieurs ensembles de volets 3 s'étendant sur toute la largeur du cadre support 5. Les ensembles de volets 3 peuvent être séparés par un élément de commande 13 afin d'assurer leur rotation synchrone.

Comme le montre la figure 2, l'élément de commande 13 comporte notamment une bielle 7 de commande. Le ou les volets 3 comportent un bras de commande 30, perpendiculaire à leur axe de pivotement A et portant un axe de liaison B. L'axe de pivotement A et les axes de liaison B sont tous parallèles à l'axe Y du trièdre. Ledit bras de commande 30 vient généralement de matière avec lesdits volets 3.

L'élément de commande 13 comporte également un actionneur 9. L'actionneur 9 peut être électrique, comme par exemple un moteur électrique ou encore pneumatique, comme par exemple un vérin. Ledit actionneur 9 applique à la bielle 7 de commande un mouvement de translation au moyen d'un levier 11. Sur les différentes figures, cette translation se fait selon l'axe Z du trièdre.

Les volets 3 peuvent pivoter chacun autour d'un axe de pivotement A défini par leur liaison avec le cadre support 5. Les axes de liaison B entre les volets 3 et la bielle 7 de commande sont excentrés par rapport aux axes de pivotement A de sorte qu'un mouvement de translation parallèlement à l'axe Z du trièdre de la bielle 7 de commande, sous l'action de l'actionneur 9, entraîne le pivotement des volets 3 autour de leurs axes de pivotement A respectifs et donc le passage desdits volets 3 d'une position à une autre.

Tous les volets 3 étant reliés à la même bielle 7 de commande, le passage d'une position d'ouverture à une position d'obturation est synchrone pour tous lesdits volets 3. Il est également possible que l'ensemble ne comporte qu'un seul volet 3.

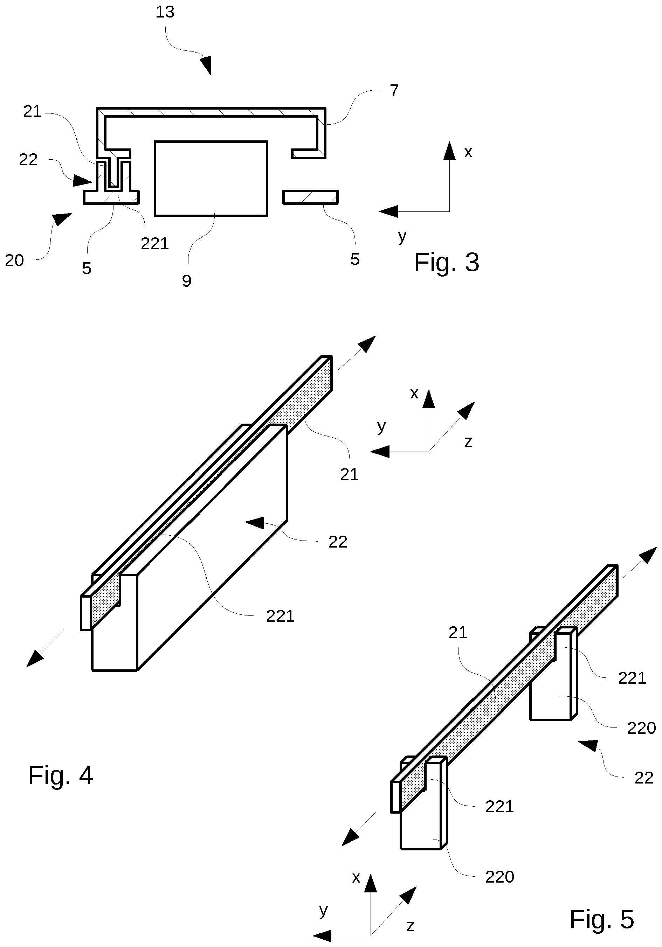

Comme le montre la figure 3 représentant schématiquement une coupe transversale d'un élément de commande 13, le dispositif d'obturation 1 comporte un dispositif de guidage 20 en translation de la bielle 7 de commande.

La présence d'un dispositif de guidage 20 en translation de la bielle 7 permet d'accompagner les mouvements en translation de ladite bielle 7 de commande et diminue ainsi les risques de louvoiement de ladite bielle 7 de commande.

Ledit dispositif de guidage 20 comporte :
- au moins une première nervure 21 disposée parallèlement au mouvement de translation de la bielle 7 de commande, et
- au moins un guide 22 associé à la ou les premières nervures 21.

La ou les premières nervures 21 font saillies de la bielle 7 de commande, parallèlement à l'axe X du trièdre, et le ou les guides 22 sont disposés sur le cadre support 5 ou inversement.

Dans l'exemple illustré à la figure 3, la première nervure 21 est réalisée sur la bielle 7 de commande et le guide 22 est réalisé sur le cadre support 5. Il est toutefois tout à fait possible d'imaginer que ces éléments soient inversés et que la première nervure 21 soit réalisée sur le cadre support 5 et que le guide 22 soit réalisé sur la bielle 7 de commande. Dans l'exemple illustré à la figure 3, le dispositif d'obturation 1 comporte un unique dispositif de guidage 20, pouvant par exemple être disposé sur un des côtés de l'actionneur 9.

De préférence, la ou les premières nervures 21 ainsi que le ou les guides 22 viennent de matière avec l'élément qui les porte. En effet, le cadre support 5 et la bielle 7 de commande peuvent être réalisés en matière plastique et être moulés. La ou les premières nervures 21 et le ou les guides 22 peuvent ainsi être fabriqués par moulage en même temps que l'élément qui les porte.

Selon un premier mode de réalisation illustré aux figures 3 à 6, le guide 22 peut comprendre au moins une rainure 221 dans laquelle une première nervure 21 associée est apte à coulisser.

La figure 4 montre une première variante de ce premier mode de réalisation dans laquelle le guide 22 comporte une rainure 221 unique. Dans cette rainure 221 unique, la première nervure 21 peut coulisser selon les flèches représentées. La rainure 221 ainsi que la première nervure 21 sont suffisamment longues pour limiter voire empêcher le louvoiement de la bielle 7 de commande.

Selon une deuxième variante illustrée à la figure 5, le guide 22 peut comporter au moins deux éléments de guidage 220 alignés dans le même axe que la première nervure 21 et espacés les uns des autres. Chaque élément de guidage 220 comprend une rainure 221. Les rainures 221 des éléments de guidages 220 sont alignées de sorte qu'une même première nervure 21 associée puisse coulisser simultanément dans les rainures 221 de tous les éléments de guidage 220.

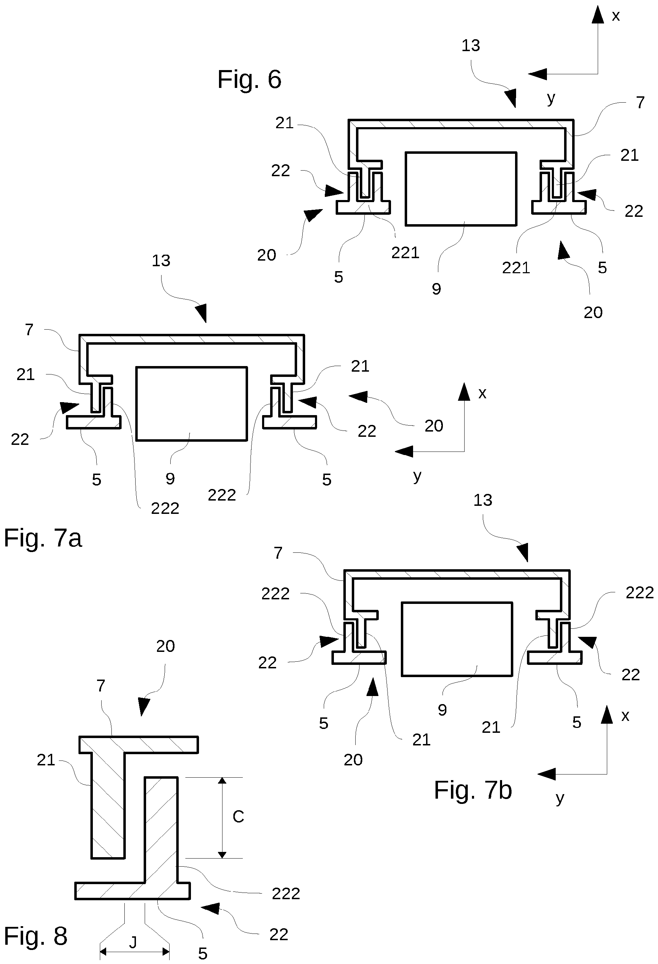

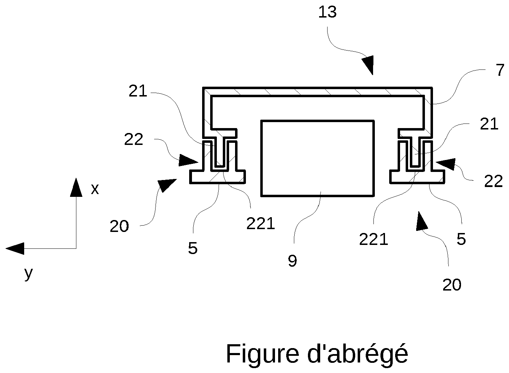

Comme le montre la figure 6, le dispositif d'obturation 1 peut comporter deux dispositifs de guidage 20. Dans ce cas de figure, les dispositifs de guidage 20 sont disposés chacun sur un bord latéral de la bielle 7 de commande, de part et d'autre de l'actionneur 9. Sur chaque bord latéral de la bielle 7 de commande l'on peut retrouver une première nervure 21 associée à un guide 22 disposé en vis à vis sur le cadre support ou inversement. L'utilisation de deux dispositifs de guidage 20 permet un meilleur guidage des mouvements de translation de la bielle 7 de commande.

Selon un deuxième mode de réalisation illustré aux figures 7a et 7b, le dispositif de guidage 20 peut comporter :
- deux premières nervures 21, et
- un guide 22 pour chacune desdites premières nervures 21, lesdits guides 22 comportant une deuxième nervure 222.

Les premières nervures 21 font saillies de la bielle 7 de commande, parallèlement à l'axe X du trièdre, et les deuxièmes nervures font saillies du cadre support 5, également parallèlement à l'axe X du trièdre, ou inversement.

Chaque première nervure 21 a sa paroi interne placée en vis à vis de la paroi externe d'une deuxième nervure 222 ou à l'inverse, chaque première nervure 21 a sa paroi externe placée en vis à vis de la paroi interne d'une deuxième nervure 222. Par paroi interne, on entend la paroi qui fait face au centre de l'élément de commande 13 et par opposition, on entend par paroi externe la paroi qui fait face à l'extérieur de l'élément de commande 13.

Dans l'exemple illustré à la figure 7a, les deux premières nervures 21 sont portées par la bielle 7 de commande. Lesdites premières nervures 21 sont disposées chacune sur un bord latéral de la bielle 7 de commande, de part et d'autre de l'actionneur 9. Les deuxièmes nervures 222 sont quant à elles portées par le cadre support 5, de part et d'autre de l'actionneur 9. Dans cet exemple, les parois internes des premières nervures 21 sont en vis-à-vis des parois externes des deuxièmes nervures 222.

A contrario, dans l'exemple illustré à la figure 7b, les premières 21 et deuxièmes 222 nervures sont portées par les mêmes éléments, mais les parois externes des premières nervures 21 sont en vis-à-vis des parois internes des deuxièmes nervures 222.

Comme le montre la figure 8, afin de limiter le plus possible le louvoiement et permettre un bon coulissage de la ou des premières nervures 21, le jeu J entre une première nervure 21 et son guide 22 peut être compris entre 0,1 et 0,5 mm, de préférence entre 0,2 et 0,3 mm.

Lors de son mouvement en translation, la bielle 7 de commande subit également un décalage en profondeur du fait qu'elle est mue par le levier 11. En effet, l'extrémité dudit levier 11 en contact avec ladite bielle 7 de commande a un mouvement en arc de cercle qui est transmis au moins partiellement à ladite bielle 7 de commande. Afin d'éviter que la première nervure 21 ne sorte de son guide 22, le chevauchement C entre la ou les premières nervures 21 et le guide 22 est de préférence supérieur d'au moins 2 mm au décalage en profondeur de la bielle 7 de commande lors de son mouvement de translation.

Dans l'exemple illustré à la figure 8, le guide 22 est selon le deuxième mode de réalisation et comporte une deuxième nervure 222. Cependant, ces valeurs du jeu J et du chevauchement C sont également valables dans le cas où le guide 22 est selon le premier mode de réalisation et comporte une rainure 221.

Ainsi, on voit bien que le dispositif d'obturation de part la présence d'un dispositif de guidage 20 entre la bielle 7 de commande et le cadre support 5, permet de diminuer les risques de louvoiement de la bielle 7 de commande.

## Revendications

1. Dispositif d'obturation (1) pour entrée d'air de face avant de véhicule automobile, comprenant :
• un cadre support (5),
• au moins un volet (3) monté pivotant autour d'un axe de pivotement (A) entre une position d'obturation et une position d'ouverture, ledit au moins un volet (3) étant installé au sein du cadre support (5),
• au moins un élément de commande (13) pilotant le positionnement du ou des volets (3), ledit élément de commande (13) comportant :
∘ une bielle (7) de commande reliée à ledit au moins un volet (3),
∘ un actionneur (9) apte à appliquer à la bielle (7) de commande un mouvement de translation de sorte à faire pivoter ledit au moins un volet (3),
**caractérisé en ce que** ledit dispositif d'obturation (1) comporte un dispositif de guidage (20) en translation de la bielle (7) de commande.

2. Dispositif d'obturation (1) selon la revendication 1, **caractérisé en ce que** le dispositif de guidage (20) comporte :
• au moins une première nervure (21) disposée parallèlement au mouvement de translation de la bielle (7) de commande, et
• au moins un guide (22) associé à la ou les premières nervures (21),
la ou les premières nervures (21) faisant saillies de la bielle (7) de commande et le ou les guides (22) étant disposés sur le cadre support (5) ou inversement.

3. Dispositif d'obturation (1) selon la revendication 2, **caractérisé en ce qu'**au moins un guide (22) comporte une rainure (221) dans laquelle une première nervure (21) associée est apte à coulisser.

4. Dispositif d'obturation (1) selon la revendication 2, **caractérisé en ce qu'**au moins un guide (22) comporte au moins deux éléments de guidage (220) alignés et espacés les uns des autres, les éléments de guidage (220) comprenant une rainure (221), lesdites rainures (221) étant alignées entre elles de sorte qu'une même première nervure (21) associée puisse coulisser simultanément dans les rainures (221) de tout les éléments de guidages (220).

5. Dispositif d'obturation (1) selon l'une des revendications 1 à 4, **caractérisé en ce qu'**il comporte un unique dispositif de guidage (20).

6. Dispositif d'obturation (1) selon l'une des revendications 2 à 4, **caractérisé en ce qu'**il comporte deux dispositifs de guidage (20), les premières nervures (21) ou les deux guides (22) desdits dispositifs de guidage (20) étant disposés chacun sur un bord latéral de la bielle (7) de commande.

7. Dispositif d'obturation (1) selon la revendication 2, **caractérisé en ce que** le dispositif de guidage (20) comporte :
• deux premières nervures (21), et
• un guide (22) pour chacune desdites premières nervures (21), lesdits guides (22) comportant une deuxième nervure (222),
les premières nervures (21) faisant saillies de la bielle (7) de commande et les deuxièmes nervures (22) faisant saillies du cadre support (5) ou inversement, chaque première nervure (21) ayant sa paroi interne placée en vis à vis de la paroi externe d'une deuxième nervure (222) ou chaque première nervure (21) ayant sa paroi externe placée en vis à vis de la paroi interne d'une deuxième nervure (222).

8. Dispositif d'obturation (1) selon l'une des revendications 2 à 7, **caractérisé en ce que** le jeu (J) entre la ou les premières nervures (21) et le guide (22) est compris entre 0,1 et 0,5 mm, de préférence entre 0,2 et 0,3 mm.

9. Dispositif d'obturation (1) selon l'une des revendications 2 à 8, **caractérisé en ce que** le chevauchement (C) entre la ou les premières nervures (21) et le guide (22) est supérieur d'au moins 2 mm au décalage en profondeur de la bielle (7) de commande lors de son mouvement de translation.

10. Dispositif d'obturation (1) selon l'une des revendications 2 à 9, **caractérisé en ce que** la ou les premières nervures (21) et le ou les guides (22) viennent de matière avec l'élément qui les porte.

## Patentansprüche

1. Verschlussvorrichtung (1) für einen Lufteinlass an der Frontseite eines Kraftfahrzeugs, umfassend:
• einen Tragrahmen (5),
• mindestens eine Klappe (3) die um eine Schwenkachse (A) schwenkbar gelagert ist zwischen einer Schließstellung und einer Öffnungsstellung, wobei die mindestens eine Klappe (3) in dem Tragrahmen (5) angebracht ist,
• mindestens ein Steuerelement (13), das die Positionierung der Klappe oder der Klappen (3) lenkt, wobei das Steuerelement (13) beinhaltet:
∘ eine Steuerstange (7), die mit der mindestens einen Klappe (3) verbunden ist,
∘ einen Aktor (9), der geeignet ist, der Steuerstange (7) eine Translationsbewegung aufzuerlegen, so dass die mindestens eine Klappe (3) geschwenkt wird,
**dadurch gekennzeichnet, dass** die Verschlussvorrichtung (1) eine Führungsvorrichtung (20) zur translatorischen Führung der Steuerstange (7) beinhaltet.

2. Verschlussvorrichtung (1) nach Anspruch 1, **dadurch gekennzeichnet, dass** die Führungsvorrichtung (20) beinhaltet:
• mindestens eine erste Rippe (21), die parallel zur Translationsbewegung der Steuerstange (7) angeordnet ist, und
• mindestens eine Führung (22), die der oder den ersten Rippen (21) zugeordnet ist, wobei die erste Rippe oder die ersten Rippen (21) von der Steuerstange (7) abstehen und die Führung oder die Führungen (22) an dem Halterahmen (5) angeordnet sind oder umgekehrt.

3. Verschlussvorrichtung (1) nach Anspruch 2, **dadurch gekennzeichnet, dass** mindestens eine Führung (22) eine Nut (221) beinhaltet, in der eine zugeordnete erste Rippe (21) gleiten kann.

4. Verschlussvorrichtung (1) nach Anspruch 2, **dadurch gekennzeichnet, dass** mindestens eine Führung (22) mindestens zwei Führungselemente (220) beinhaltet, die fluchten und voneinander beabstandet sind, wobei die Führungselemente (220) eine Nut (221) umfassen, wobei die Nuten (221) untereinander fluchten, so dass dieselbe zugeordnete erste Rippe (21) gleichzeitig in den Nuten (221) aller Führungselemente (220) gleiten kann.

5. Verschlussvorrichtung (1) nach einem der Ansprüche 1 bis 4, **dadurch gekennzeichnet, dass** sie eine einzige Führungsvorrichtung (20) beinhaltet.

6. Verschlussvorrichtung (1) nach einem der Ansprüche 2 bis 4, **dadurch gekennzeichnet, dass** sie zwei Führungsvorrichtungen (20) beinhaltet, wobei die ersten Rippen (21) oder die beiden Führungen (22) der Führungsvorrichtungen (20) jeweils an einem seitlichen Rand der Steuerstange (7) angeordnet sind.

7. Verschlussvorrichtung (1) nach Anspruch 2, **dadurch gekennzeichnet, dass** die Führungsvorrichtung (20) beinhaltet:
• zwei erste Rippen (21) und
• eine Führung (22) für jede der ersten Rippen (21), wobei die Führungen (22) eine zweite Rippe (222) beinhalten,
wobei die ersten Rippen (21) von der Steuerstange (7) abstehen und die zweiten Rippen (22) vom Tragrahmen (5) abstehen oder umgekehrt, wobei die Innenwand jeder ersten Rippe (21) gegenüber der Außenwand einer ersten Rippe (222) platziert ist oder die Außenwand jeder ersten Rippe (21) gegenüber der Innenwand einer zweiten Rippe (222) platziert ist.

8. Verschlussvorrichtung (1) nach einem der Ansprüche 2 bis 7, **dadurch gekennzeichnet, dass** das Spiel (J) zwischen der oder den ersten Rippen (21) und der Führung (22) zwischen 0,1 und 0,5 mm, bevorzugt zwischen 0,2 und 0,3 mm beträgt.

9. Verschlussvorrichtung (1) nach einem der Ansprüche 2 bis 8, **dadurch gekennzeichnet, dass** die Überlappung (C) zwischen der oder den ersten Rippen (21) und der Führung (22) um mindestens 2 mm größer als der Tiefenversatz der Steuerstange (7) bei deren Translationsbewegung ist.

10. Verschlussvorrichtung (1) nach einem der Ansprüche 2 bis 9, **dadurch gekennzeichnet, dass** die erste Rippe oder die ersten Rippen (21) und die Führung oder die Führungen (22) einstückig mit dem sie tragenden Element sind.

## Claims

1. Closure device (1) for an air inlet in the front face of a motor vehicle, comprising:
• a support frame (5),
• at least one louvre (3) mounted to pivot about a pivoting axis (A) between a closed position and an open position, said at least one louvre (3) being installed within the support frame (5),
• at least one control element (13) controlling the positioning of the one or more louvres (3), said control element (13) comprising:
∘ a control rod (7) connected to said at least one louvre (3),
∘ an actuator (9) capable of applying a translational movement to the control rod (7) in such a manner as to cause said at least one louvre (3) to pivot,
**characterized in that** said closure device (1) comprises a device (20) for guiding the control rod (7) in translation.

2. Closure device (1) according to Claim 1, **characterized in that** the guide device (20) comprises:
• at least one first rib (21) arranged parallel to the translational movement of the control rod (7), and
• at least one guide (22) linked with the one or more first ribs (21), the one or more first ribs (21) projecting from the control rod (7) and the one or more guides (22) being arranged on the support frame (5), or vice versa.

3. Closure device (1) according to Claim 2, **characterized in that** at least one guide (22) comprises a groove (221) in which a first associated rib (21) is able to slide.

4. Closure device (1) according to Claim 2, **characterized in that** at least one guide (22) comprises at least two guide elements (220) that are aligned and spaced apart from one another, the guide elements (220) comprising a groove (221), said grooves (221) being aligned with one another in such a manner that one and the same first associated rib (21) can slide simultaneously in the grooves (221) of all the guide elements (220).

5. Closure device (1) according to one of Claims 1 to 4, **characterized in that** it comprises a single guide device (20).

6. Closure device (1) according to one of Claims 2 to 4, **characterized in that** it comprises two guide devices (20), the first ribs (21) or the two guides (22) of said guide devices (20) each being arranged on a lateral edge of the control rod (7).

7. Closure device (1) according to Claim 2, **characterized in that** the guide device (20) comprises:
• two first ribs (21), and
• one guide (22) for each of said first ribs (21), said guides (22) comprising a second rib (222),
the first ribs (21) projecting from the control rod (7) and the second ribs (22) projecting from the support frame (5), or vice versa,
each first rib (21) having its internal wall placed to face the external wall of a second rib (222) or each first rib (21) having its external wall placed to face the internal wall of a second rib (222).

8. Closure device (1) according to one of Claims 2 to 7, **characterized in that** the clearance (J) between the one or more first ribs (21) and the guide (22) is between 0.1 and 0.5 mm, preferably between 0.2 and 0.3 mm.

9. Closure device (1) according to one of Claims 2 to 8, **characterized in that** the overlap (C) between the one or more first ribs (21) and the guide (22) is at least 2 mm greater than the depth offset of the control rod (7) at the time of the translational movement thereof.

10. Closure device (1) according to one of Claims 2 to 9, **characterized in that** the one or more first ribs (21) and the one or more guides (22) are made as a single component with the element bearing them.
